# EUROPEAN PATENT SPECIFICATION

(11) **EP 2 189 684 B1**
(45) Date of publication and mention of the grant of the patent: **02.01.2013**
(21) Application number: 09176419.1
(22) Date of filing: 19.11.2009
(51) Int. Cl.: F16H 57/02

(54) **Gearmotor for an actuator for blinds**
Getriebemotor für einen Aktuator für Rollos
Motoréducteur pour un actionneur pour stores

(30) Priority: 21.11.2008 IT PN20080086
(43) Date of publication of application: 26.05.2010
(73) Proprietor: NICE S.P.A., 31046 Oderzo (Treviso) (IT)
(72) Inventor: La Fortezza, Francesco, 31046, ODERZO (TREVISO) (IT)
(74) Representative: Citron, Massimiliano

(56) References cited:
- EP-A- 0 588 769
- WO-A-99/18369
- DE-A1-102006 039 652
- US-A- 5 366 423

## Description

The invention refers to a gearmotor inside a tubular actuator for moving blinds, curtains, shutters or similar elements.

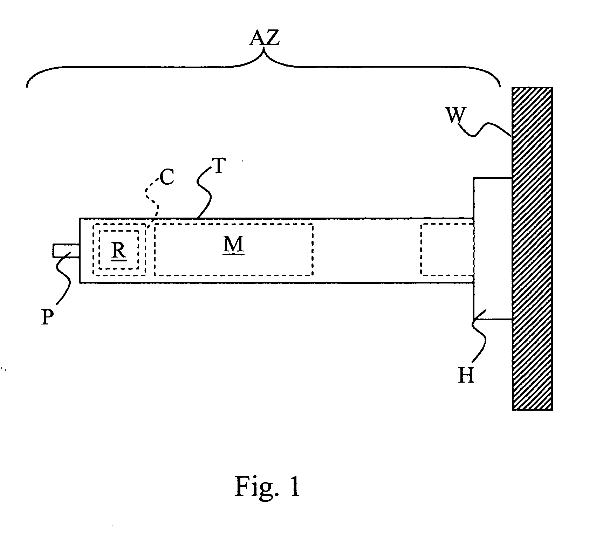

An actuator AZ of this type (see fig. 1), is generally made up of a tube T which contains: an electric motor M, a mechanical reduction gear R contained in a casing C and part of a head H in which control circuits are housed. The head H can partially be fitted into an end of the tube T, and with it, or with a relative support, the actuator AZ is fixed to a wall W, whereas from the other end an output shaft or pinion P protrudes, connected inside the reduction gear R.

The reduction gear R is designed to obtain high reduction ratios. It commonly receives an angular velocity of around 3000 rev/min. from the electric motor M, whereas it moves the shaft P with a variable speed, according to the type of use, of 25ö12 revolutions per minute. The substantial reduction in revolutions and the small size of the actuator AZ have made it necessary to use epicyclic type reduction gears, made up of many cascaded stages (generally 3). Each stage has its own independent crown gear (see for example EP 0 863 331 or the genericEP 0 588 769).

Each stage can undergo forces of different intensity. The first stage stands a high number of revolutions, high wearing and limited torque, whereas the third stage stands high torque, limited wearing and a low number of revolutions. The second stage has an intermediate behaviour.

The high rotation speed of the motor M and of at least the first stage of the reduction gear R are the main reason why the actuator AZ is noisy, which sometimes can be very annoying.

The production quality and the precision of the components work together to decrease the noise level of the actuator AZ, also helped by the use of plastic materials to manufacture the gears of the reduction gear R.

In indoor applications, the noise of the actuator is a fundamental parameter. Specific laboratory tests have demonstrated that the mechanical reduction gear R is the component of the actuator AZ which causes the highest level of noise, currently always greater than 45dB.

The use of gears in plastic material does indeed help to decrease the noise and the vibrations present between the gears of the first stage, but it is intrinsically insufficient to make the overall noise of the entire reduction gear R drop below 45dB.

US 5 366 423 discloses a reduction gear designed for reducing the dimensions and the noise generation thereof. The noise reduction is achieved both through size and backlash reduction and by lodging the reduction-gear inside a cylinder to be rotated. Between the cylinder and a stationary case for the reduction gear there is a clearance.

DE 10 2006 039652 has a reduction gear with an external tubular member, which is not fixed and in contact with an external tube inside which it rotates. A careful choice of the components decreases the noise generated when some components bump into one another to change the reduction gear's configuration.

WO 99/18369 discloses an actuator with an internal reduction gear. Such gear has an enclosing toothed rim which is fixedly connected to a cylindrical drum via an integral transitional portion. Between the rim and the external drum there is an air gap.

Deep examination by the Applicant has highlighted the cause, previously unknown, which is responsible for the minimum level of noise and vibration.

It has been discovered that the residual noise and vibrations of the reduction gear R group are transmitted to the casing C which contains it, and since this is made from rigid material, it retransmits them to the containment tube T and from here to the outside.

The containment tube T is made with materials, shapes and sizes which are suitable for ensuring a high level of rigidity over time which keeps all the components inside it aligned. It is commonly made from metal material, which, however, is a medium which transmits sounds and vibrations optimally, or in some cases, it can be made from plastic material.

The propagation of sounds and vibrations is indeed the reason why the minimum noise threshold is at 45dB.

The object of the invention is to make a gearmotor, and an actuator which adopts it, characterized by lower noise values than those normally obtained. Another object is that of making a gearmotor, and an actuator which adopts it, which interrupts the transmission of sounds and vibrations from inside the reduction gear to the outside.

Such objects are achieved by an actuator having the features of claim 1.

The dependent claims illustrate advantageous variants of the invention, including that the material forming the tubular member has a hardness D between 52 and 60 Shore, and/or that it is a thermoplastic elastomerized mixture, and/or that it is a polyester-based mixture, and/or that it is a polyamidic fiber, and/or that it is a polyamide selected from the group that includes PA6, PA12, PA66.

Hereafter, a preferred embodiment of a gearmotor is described, which refers to the attached drawings in which
- figure 1 shows a simplified diagram of an actuator;

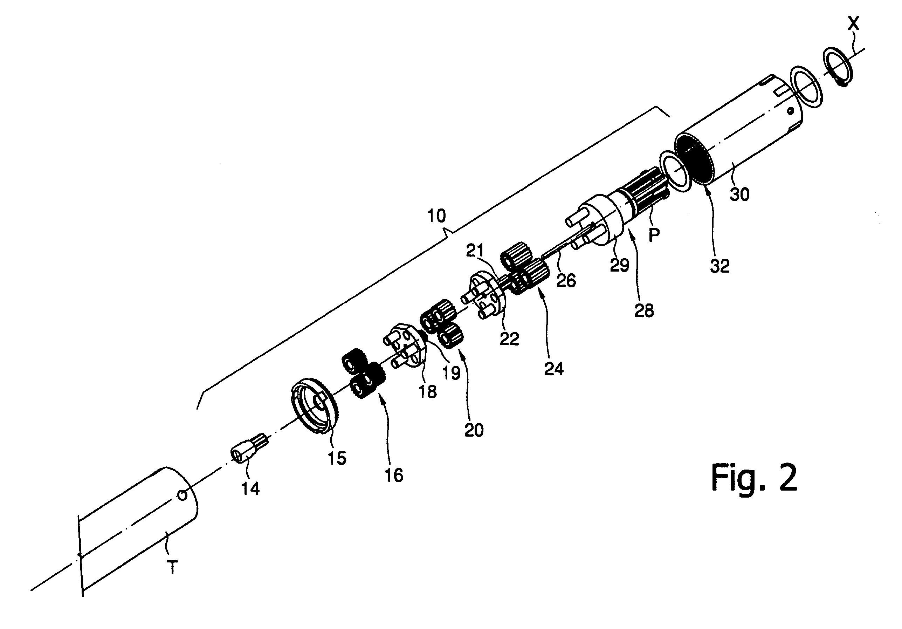

- figure 2 shows an exploded view of a gearmotor according to the invention.

Since figure 1 also represents the inner structure of the actuator, according to the invention, this can be referred to for the general architecture.

The mechanical reduction gear 10, which implements the block R, is made up of epicyclic gears, in particular three groups 16, 20, 24 of three planet gears each, two planet carriers 18, 22 for the first two groups, a rotor 28 with a planet carrier 29 on one end and one end configured as a pinion P, a plug 15 and a hollow tubular member 30 with an internal toothing 32, which preferably extends along its entire length.

The planet carriers 18, 22 have an integral sun gear 19, 21, on which the groups 20, 24 respectively engage at the centre. The group 16 engages, on the other hand, on the toothing of a sun gear 14 connected to the motor M, whereas the group 24 is supported by the end 29. A motor centring pin 26 completes the assembly.

The movable components rotate around a common longitudinal axis X.

All the aforementioned components are housed in the element 30, and the latter is precisely fitted without any clearance inside a tube T (preferably but not necessarily made from metal).

Each planet gear of the groups 16, 20, 24 engages onto the internal toothing 32 of the element 30, which acts as a common fixed crown gear.

The plug 15 can be fastened on to the mouth of the element 30, and has the function of keeping all the components of the reduction gear 10 grouped together and partially of not letting the lubricating oil, present on the components, come out.

In action, the reduction gear 10 receives as input the rotary motion from the motor M through the pinion 14 and transmits it as output to the blinds through the pinion P which protrudes from the element 30 and from the tube T.

The element 30 is made from a material having particular physical and mechanical properties which allow the noise to be abated and the vibrations to be absorbed.

It is preferable for said material to have at least one of the following properties:
Tensile Modulus ≥ 2000MPa;
Tensile Elongation ≥ 50%, preferably ≥ 100%;
Notched Izod impact ≥ 400J/m, preferably ≥ 600J/m.

This combination has given a particularly low level of noise and vibrations, i.e. particular abatement.

Said material can be chemically composed of polyamide PA6 and a minimum percentage of elastomer of 15%, or similar nylon 6 and 6/6 based plastics.

This combination has also obtained a particularly low level of noise and vibration, i.e. particular abatement.

As an example, the following materials which respect said properties can be found on the market:
GREENAMID® 6 ST4, produced and marketed by DSM Engineering Plastics;
AKULON® K233 TP4, produced and marketed by DSM PLASTICGREEN srl;
ZYTEL ST811 HS, produced and marketed by Du Pont.

The thermoplastic elastomerized mixture present in said materials gives the component 30 good properties of mechanical resistance but at the same time also of high elasticity and resistance to impacts. These properties allow it to absorb the residual vibrations propagating along the gear chain in the reduction gear 12.

The element 30 thus made makes it possible, together with the plug 15 and with the planet carrier 29 structure, to make an "insulating container" for containing all the gears that cause noise in the reduction gear 10. At the same time, the element 30, inserted inside and in direct contact with the tube T, does not transmit residual vibrations and noise to it after the propagation along the gear chain in the reduction gear 12, but absorbs them.

Therefore, advantageously, the element 30 has a dual function: it absorbs the vibrations and acoustically insulates, i.e., it is phono-absorbent. Of course, the adoption of these materials for making all or only a part of the inner gears allows the further decrease of noise and vibrations to be obtained. Thanks to the materials, the vibrations of the drive shaft, be it made from plastic material or steel, which inevitably reach also these gears, are mostly absorbed and not transmitted.

With the element 30 thus manufactured, a noise level of around 40dB has been achieved.

A further improvement is obtained when the following combination of materials is adopted:
- gears 16 of the first stage in HYTREL 5556;
- gears 20 of the second stage in POM (Acetal Polyoxymethylene Copolymer);
- gears 24 of the third stage in sintered steel;
- planet carrier 18 of the first stage and pinion 19 of the second stage in sintered steel;
- planet carrier 22 of the second stage and pinion 21 of the third stage in sintered steel;
- planet carrier 29 of the third stage in PA66 + 30% fibreglass, with pins made of steel;
- containment crown gear (hollow tubular member) 30 in GRENAMID ST 4.

## Claims

1. Actuator for blinds comprising
a tube (T) containing: an electric motor (M), a mechanical reduction gear (R) contained in a casing (C) and part of a head (H) in which control circuits are housed;
an epicyclic gear train (16, 18, 20, 22, 24, 29) adapted to reduce the number of revolutions between the electric motor (M) and an output pinion (P),
the train being arranged inside a tubular member (30) provided with an internal toothing (32),
so that a plurality of planet gears of the train are all meshing on said internal toothing (32), wherein
the tubular member (30) is (i) fitted inside and in direct contact with the tube and (ii) is
made of phono- and/or vibration-absorbing material able to not transmit vibrations and noise to the tube and able to absorb them,
**characterized**
**by** comprising three cascaded epicyclic reduction stages, where, in descending order along the revolution reduction cascade:
- the gears (16) of the first stage are made of Hytrel 5556;
- the gears (20) of the second stage are made of POM,
- the gears (24) of the third stage, the planet carrier (18) of the first stage and the pinion (19) of the second stage, the planet carrier (22) of the second stage and the pinion (21) of the third stage are made of sintered steel;
- the planet carrier (29) of the third stage is made of PA66 plus 30% fiberglass, with pins made of steel.

2. Actuator according to claim 1, wherein said material presents a tensile elongation of more than 50%.

3. Actuator according to claim 1 or 2, wherein said material presents a resistance to a notched Izod impact greater than 400 J/m.

4. Actuator according to any one of the preceding claims, wherein said material presents a tensile modulus greater than 2000 MPa.

5. Actuator according to any one of the preceding claims, wherein said material presents a density less than 1.13 g/cm³.

6. Actuator according to any of the preceding claims, wherein said material is a material composed of PA6 and at least a 15% percentage of elastomer.

7. Actuator according to any one of the preceding claims, wherein said material has a hardness D between 52 and 60 Shore, and/or is a thermoplastic elastomerized mixture, and/or is a polyester-based mixture, and/or is a polyamidic fiber, and/or is a polyamide selected from the group comprising PA6, PA12, PA66.

## Patentansprüche

1. Antrieb für Rollläden bestehend aus
einem Rohr (T) mit: einem Elektromotor (M), einem mechanischen Getriebe (R), das in einem Gehäuse (C) untergebracht ist, und Teil eines Kopfes (H), wo sich die Schaltkreise befinden;
einem Planetenlagersatz (16, 18, 20, 22, 24, 29) für die Minderung der Drehzahlen zwischen dem Elektromotor (M) und einem Abtriebsritzel (P), wobei der Satz in einem Röhrenelement (30) mit interner Verzahnung (32) angeordnet ist,
so dass mehrere Planetenräder des Satzes alle in die besagte interne Verzahnung (32) eingreifen, wo
das Röhrenelement (30) (i) innen eingefügt ist und sich in direktem Kontakt mit dem Rohr befindet und (ii) aus einem schall- und/oder schwingungsdämpfenden Material hergestellt ist, das in der Lage ist,
keine Schwingungen und Geräusche an das Rohr zu übertragen und das auch in der Lage ist, diese aufzunehmen,
**dadurch gekennzeichnet, dass** es
drei in Folge angeordnete Planetenstufen enthält, wo in absteigender Reihenfolge in der Reihenschaltung der Drehzahlminderung:
- die Verzahnungen (16) der ersten Stufe aus HYTREL 5556 sind;
- die Verzahnungen (20) der zweiten Stufe aus POM sind,
- die Verzahnungen (24) der dritten Stufe, das Hohlrad (18) der ersten Stufe und das Ritzel (19) der zweiten Stufe, das Hohlrad (22) der zweiten Stufe und das Ritzel (21) der dritten Stufe aus gesintertem Stahl sind;
- das Hohlrad (29) der dritten Stufe aus PA66 plus 30% Glasfaser, mit Stahlstacheln ist.

2. Antrieb nach Anspruch 1, **dadurch gekennzeichnet, dass** das besagte Material eine Bruchverlängerung von mehr als 50% aufweist.

3. Antrieb nach Anspruch 1 oder 2, **dadurch gekennzeichnet, dass** das besagte Material eine Kerbschlagzähigkeit IZOD von mehr als 400 J/m aufweist.

4. Antrieb nach einem der vorhergehenden Ansprüche, **dadurch gekennzeichnet, dass** das besagte Material eine Zugfestigkeit von mehr als 2000 Mpa aufweist.

5. Antrieb nach einem der vorhergehenden Ansprüche, **dadurch gekennzeichnet, dass** das besagte Material einen Dichtewert von unter 1.13 g/cm³ aufweist.

6. Antrieb nach einem der vorhergehenden Ansprüche, **dadurch gekennzeichnet, dass** das besagte Material ein Material ist, das aus P6 und einem prozentualen Anteil von mindestens 15% Elastomer besteht.

7. Antrieb nach einem der vorhergehenden Ansprüche, **dadurch gekennzeichnet, dass** das besagte Material eine Härte D zwischen 52 und 60 Shore hat, und/oder eine thermoplastische vernetzte Mischung, und/oder eine Mischung auf Polyesterbasis ist, und/oder eine Polyamidfaser ist, und/oder ein aus der Gruppe ausgewähltes Polyamid ist, das PA6, PA12, PA66 umfasst.

## Revendications

1. Entraînement pour stores roulants comprenant :
un tube (T) contenant : un moteur électrique (M), un réducteur mécanique (R) enfermé dans un boîtier (C) et une partie d'une tête (H) dans laquelle sont logés des circuits de contrôle ;
un train d'engrenages planétaires (16, 18, 20, 22, 24, 29), en mesure de réduire le nombre de tours entre le moteur électrique (M) et un pignon de sortie (P),
le train étant disposé à l'intérieur d'un élément tubulaire (30) doté d'une denture interne (32),
de manière à ce que plusieurs satellites du train soient tous engagés sur cette denture interne (32), et où
l'élément tubulaire (30) est (i) inséré dans le tube et en contact direct avec celui-ci et est (ii) réalisé dans un matériau phono- et/ou vibro-absorbant capable d'empêcher la transmission des vibrations et des bruits au tube et de les absorber,
**caractérisé par** le fait de comprendre
trois étages de réduction planétaires en cascade dans lesquels, par ordre décroissant le long de la cascade de réduction des tours :
- les engrenages (16) du premier étage sont en HYTREL 5556 ;
- les engrenages (20) du deuxième étage sont en POM ;
- les engrenages (24) du troisième étage, le porte-satellites (18) du premier étage et le pignon (19) du deuxième étage, le porte-satellites (22) du deuxième étage et le pignon (21) du troisième étage sont en acier fritté ;
- le porte-satellites (29) du troisième étage est en PA66 plus 30 % de fibres de verre, avec des goujons en acier.

2. Entraînement selon la revendication 1, dans lequel le matériau présente un allongement à la rupture supérieur à 50 %.

3. Entraînement selon la revendication 1 ou 2, dans lequel le matériau présente une résistance au choc avec entaille IZOD supérieure à 400 J/m.

4. Entraînement selon l'une quelconques des revendications précédentes, dans lequel le matériau présente un module de résistance à la traction supérieur à 2000 MPa.

5. Entraînement selon l'une quelconques des revendications précédentes, dans lequel le matériau présente une valeur de densité inférieure à 1.13 g/cm³.

6. Entraînement selon l'une quelconques des revendications précédentes, dans lequel le matériau est un matériau constitué de PA6 et d'un pourcentage d'au moins 15 % d'élastomère.

7. Entraînement selon l'une quelconques des revendications précédentes, dans lequel le matériau a une dureté D se situant entre 52 et 60 shores, et/ou est un mélange thermoplastique élastomérisé, et/ou est un mélange à base de polyester, et/ou est une fibre polyamide, et/ou est un polyamide sélectionné au sein du groupe incluant PA6, PA 12 et PA66.
